# Europäisches Patentamt
# European Patent Office
# Office européen des brevets

(11) Veröffentlichungsnummer: **0 036 619** A 1

## EUROPÄISCHE PATENTANMELDUNG

(21) Anmeldenummer: 81101992.6

(51) Int. Cl.³: **H 04 M 3/48**, H 04 Q 3/42

(22) Anmeldetag: 17.03.81

(30) Priorität: 25.03.80 DE 3011471
20.08.80 DE 3031437

(71) Anmelder: **SIEMENS AKTIENGESELLSCHAFT Berlin und München, Postfach 22 02 61, D-8000 München 22 (DE)**

(43) Veröffentlichungstag der Anmeldung: **30.09.81**
**Patentblatt 81/39**

(72) Erfinder: Steuer, Bernd, Dipl.-Ing., Maierwinkel 4, D-8000 München 71 (DE)
Erfinder: Kossakowski, Maximilian Dipl.-Ing., Waakirchnerstrasse 14, D-8000 München 70 (DE)
Erfinder: Honold, Horst, Dipl.-Ing., Cimbernstrasse 66c, D-8000 München 70 (DE)
Erfinder: Kurz, Wilhelm, Ing. grad., Werneckstrasse 35, D-8000 München 70 (DE)

(84) Benannte Vertragsstaaten: **AT BE CH FR GB IT LI LU NL SE**

(54) Schaltungsanordnung für eine Fernsprechanlage, insbesondere Fernsprechnebenstellenanlage, mit einem Rückrufnachrichtenspeicher.

(57) In Abhängigkeit des Schaltzustandes Teilnehmerendstelle belegt bzw. Nichtmelden der Teilnehmerendstelle innerhalb einer bestimmten Zeit wird ein von einer vergeblich anrufenden Teilnehmerstelle belegter Verbindungssatz mit einem besonderen Rückrufnachrichtenspeicher verbunden, dem ein Nachrichtensendespeicher zugeordnet ist, so dass vom vergeblich Anrufenden auf entsprechender sprachlicher Aufforderung zum Rückrufnachrichtenspeicher durch Wahl bzw. durch Sprache die für den Aufbau einer Rückrufverbindung erforderlichen Informationen übertragbar sind. Durch eine Schaltzustandsänderung an der vergeblich angerufenen Teilnehmerendstelle wird diese mit dem Rückrufnachrichtenspeicher zur Übermittlung der Informationen für den Rückruf verbunden.

0036619

SIEMENS AKTIENGESELLSCHAFT
Berlin und München

Unser Zeichen
VPA 80 P 6040 E

Schaltungsanordnung für eine Fernsprechanlage, insbesondere Fernsprechnebenstellenanlage, mit einem Rückrufnachrichtenspeicher.

Die Erfindung bezieht sich auf eine Schaltungsanordnung für eine Fernsprechanlage, insbesondere Fernsprechnebenstellenanlage, mit zentralen Einrichtungen für die Verbindungswegeherstellung und mit bei vergeblichen Anrufen Informationen aufnehmenden Speicherplätzen, welche von einem vergeblich Angerufenen nach Freiwerden selbsttätig bzw. nach Rückkehr an seiner Teilnehmerendstelle abfragbar sind.

Durch die DE-PS 964 686 ist bereits eine Technik bekannt, bei der eine vergeblich anrufende Teilnehmerstelle durch Nachwahl einer besonderen Kennziffer einen besonderen Speicher belegt, in dem die durch eine erneute Identifizierung festgestellte Kennzeichnung der anrufenden Teilnehmerstelle und die durch erneute Wahl übertragene Kennzeichnung der anzurufenden Teilnehmerstelle aufgenommen wird. Bei dieser bekannten Anordnung wird jetzt beim Abheben des Hörers an der vergeblich angerufenen Teilnehmerstelle dieser Teilnehmerstelle anstelle des Wählzeichens ein besonderes Signal gegeben. Der Teilnehmer dieser Teilnehmerstelle kann nun entweder eine normale Verbindung herstellen oder diese Teilnehmerstelle kann durch Wahl einer besonderen Kennziffer mit dem besonderen Speicher verbunden werden und aus diesem Speicher durch zusätzliche Wahl der eigenen Rufnummer und die dadurch erfolgende

Mt 1 Kel /11.8.80

Übertragung der entsprechenden Kennzeichnung zum Speicher eine Umsetzeinrichtung betätigen, die aus dem besonderen Speicher die Kennzeichnung der vergeblich anrufenden Teilnehmerstelle aufnimmt und umsetzt in für die vergeblich angerufene Teilnehmerstelle wahrnehmbaren Zeichen. Diese Zeichen sind beispielsweise der der vergeblich anrufenden Teilnehmerstelle zugeordneten Kennzahl entsprechende Zeichen oder Töne. Bei dieser bekannten Anordnung muß dann die vergeblich angerufene Teilnehmerstelle eine neue Verbindung zur vergeblich anrufenden Teilnehmerstelle in normaler Weise mittels Kennziffernwahl, d.h. Wahl der Rufnummer der vergeblich anrufenden Teilnehmerstelle, herstellen. Der Nachteil dieser Technik ist, daß nicht nur besondere Kennziffern, sondern auch zusätzliche Kennzahlen einmal der vergeblich angerufenen Teilnehmerstelle und ein andermal der eigenen Teilnehmerstelle im Anschluß an der besonderen Kennziffer zu wählen sind. Dies bedeutet eine komplizierte Auswertung in der zentralen Steuereinrichtung. Außerdem können derartige Vorgänge nur für Teilnehmer erfolgen, die zu ein und derselben Anlage gehören.

Durch die DE-PS 1 263 110 ist eine Schaltungsanordnung für eine Fernsprechanlage, insbesondere Fernsprechnebenstellenanlage, bekannt, bei der bei einem vergeblichen Anruf durch Nachwahl einer besonderen Kennziffer die Identifizierung der anrufenden Teilnehmerstelle und die Anschaltung eines besonderen Speichers für die Aufnahme der Kennzeichnung der identifizierten Teilnehmerstelle gesteuert wird. Durch infolge der Nachwahl gesteuerte Schaltmittel einer zentralen Einrichtung wird auch die Kennzeichnung der vergeblich angerufenen Teilnehmerstelle zu einer in einem besonderen Speicher vorgesehenen Auswahleinrichtung übertragen, welche die Aufnahme der Kennzeichnung der vergeblich anrufenden Sprechstelle in einem

0036619

besonderen Adressenspeicher in Zuordnung zur angerufenen Teilnehmerstelle steuert. Ferner kann die vergeblich angerufene Sprechstelle jederzeit durch infolge Wahl einer besonderen Kennziffer gesteuerte weitere Schaltmittel der zentralen Einrichtung die Übertragung der in Zuordnung zur Kennzeichnung der vergeblich angerufenen Teilnehmerstelle gespeicherten Kennzeichnung der vergeblich anrufenden Teilnehmerstelle vom Adressenspeicher zu einem Wahlspeicher für eine erneute Verbindungsherstellung steueren. Der Nachteil dieser Anordnung besteht ebenfalls darin, daß die Teilnehmerstellen ebenfalls zu ein und derselben Anlage gehören müssen. Außerdem sind für die Abfrage der gespeicherten Informationen sowohl eine besondere Signalisierung bei der Teilnehmerstelle als auch die Herstellung der Verbindung durch den Teilnehmer mittels Wahl erforderlich.

Die Aufgabe der vorliegenden Erfindung besteht darin, bei vergeblichen Anrufen in Fernsprechanlagen, insbesondere Fernsprechnebenstellenanlagen, in möglichst einfachster Weise ohne komplizierte zusätzliche Maßnahmen der Teilnehmerstellen die Möglichkeit zu schaffen, einer vergeblich angerufenen Teilnehmerendstelle die für einen Rückruf notwendigen Informationen zu übermitteln, wobei die vergeblich anrufende Teilnehmerstelle nicht zur gleichen Fernsprechanlage wie die vergeblich angerufene Teilnehmerendstelle gehören muß.

Dies wird dadurch erreicht, daß in Abhängigkeit des Schaltzustandes "Teilnehmerendstelle belegt" bzw. "Nichtmelden der Teilnehmerendstelle" innerhalb einer von Zeitschaltmitteln vorgegebenen Zeit ein von der vergeblich anrufenden Teilnehmerstelle belegter Verbindungssatz mit einem besonderen Rückrufnachrichtenspeicher verbunden wird, dem

0036619

ein Nachrichtensendespeicher zugeordnet ist, so daß vom vergeblich Anrufenden auf entsprechender sprachlicher Aufforderung die Übertragung der Informationen, die für den Aufbau einer Rückrufverbindung seitens des vergeblich Angerufenen erforderlich sind, in einfacher Weise zum Rückrufnachrichtenspeicher einleitbar ist und daß dieser Rückrufnachrichtenspeicher in Abhängigkeit eines durch eine Schaltzustandsänderung an der betreffenden Teilnehmerendstelle des vergeblich Angerufenen mit dieser Teilnehmerendstelle zur Übermittlung der in Zugehörigkeit zur Adresse dieser Teilnehmerendstelle gespeicherten Informationen verbunden wird.

Hierdurch wird also jede vergeblich anrufende Teilnehmerstelle, gleichgültig ob der Teilnehmer belegt ist oder ob der Teilnehmer sich innerhalb einer vorgegebenen Zeit nicht meldet, weil er abwesend ist bzw. nicht abhebt, selbsttätig ohne zusätzliche Schaltmaßnahmen mit einem besonderen Rückrufnachrichtenspeicher verbunden, dem ein Nachrichtsendespeicher zugeordnet ist, welcher letztere eine sprachliche Aufforderung zum vergeblich Anrufenden übermittelt, woraufhin dieser die Übertragung von Informationen zu dem Rückrufnachrichtenspeicher einleiten kann, die vom vergeblich angerufenen in Abhängigkeit einer Schaltzustandsänderung an der betreffenden Teilnehmerendstelle die kennzeichnend sind für den Rückkehr bzw. für das Freiwerden selbsttätig anschaltbar und ggfs. abhörbar sind. Die Wahlart des Ursprungsamtes spielt keine Rolle, da Wahlumsetzungen in den Systemen integriert sind.

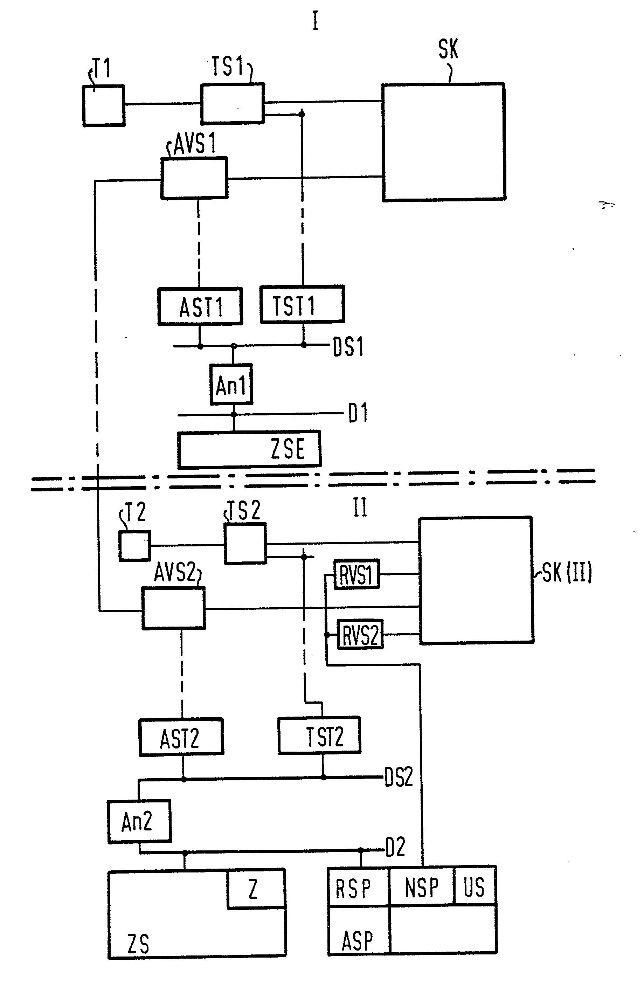

Nachstehend wird ein Ausführungsbeispiel der Erfindung anhand der Zeichnung beschrieben. In der Zeichnung sind die für das Verständnis wichtigsten Einzelheiten dargestellt. Es ist von einer zentralgesteuerten Fernsprechanlage ausgegangen, die die Verbindungsherstellung über ein räumliches Koppelfeld ermöglicht. Selbstverständlich ist aber die Erfindung in jeder anderen Art von Fernsprechanlage, insbesondere auch in Anlagen mit digitalen Netzwerken, anwendbar.

Es ist davon ausgegangen, daß der Teilnehmer der Teilnehmerstelle T1 der Fernsprechanlage I eine Verbindung über ein entsprechendes Ortsnetz und/oder Fernnetz mit einem Teilnehmer der Teilnehmerendstelle T2 der Anlage II herstellt und der Teilnehmer der letztgenannten Teilnehmerendstelle entweder belegt ist, oder innerhalb einer bestimmten Zeit, die von den Zeitschaltmitteln Z in der zentralen Zusatzeinrichtung ZZ bestimmt wird, den Hörer nicht abhebt. Die Verbindung zwischen der Teilnehmerstelle T1 und der Teilnehmerendstelle T2 verläuft beispielsweise wie folgt: Teilnehmerstelle T1, Teilnehmerschaltung TS1, Sprechwegekoppelnetzwerk SK, Verbindungssatz AVS1, ferner den Weg über das Orts- und/oder Fernnetz von der Anlage I zu der Anlage II und dort über den Verbindungssatz AVS2, das Sprechwegekoppelnetzwerk SK (II),die Teilnehmerschaltung TS2 zur Teilnehmerendstelle T2. Diese Teilnehmerendstelle T2 kann sowohl eine normale Sprechstelle als auch ein Datenendgerät sein. Sowohl in der Anlage I als auch in der Anlage II ist angenommen, daß den Amtsverbindungssätzen jeweils in der eigenen Anlage eine gemeinsame Teilsteuerung AST1 bzw. AST2 und ebenfalls den Teilnehmerstellen der eigenen Anlage jeweils eine Teilsteuerung TST1 bzw. TST2 zugeordnet sind, die über eine Datenübertragungsleitung DS1 bzw. DS2 miteinander und über einen Anschaltesatz An1

0036619

bzw. An2 und eine weitere Datenübertragungsleitung D1
bzw. D2 mit der Zentralsteuerung ZS und in der Anlage II
mit der Zentralen Zusatzeinrichtung ZZ in Verbindung stehen

Der den Teilnehmerstellen der Anlage 2 zugeordneten Teilsteuerung ist ein Speicher TSP zugeordnet, in dem die
teilnehmerindividuellen Informationen wie Berechtigungen
und Sonderkennzeichnungen aufgenommen werden, wozu in
diesem Speicher für jede Teilnehmerstelle individuelle
Speicherplätze vorgesehen sind. Diese Speicherplätze
können, ebensogut aber der zentralen Steuerung zugeordnet
werden. Die jeweilige Zuordnung ist nur abhängig von der
Organisation der Anlage.Die für die Vorbereitung eines
Rückrufes erforderlichen Mittel können entweder der zentralen Steuerung selbst zugeordnet werden oder aber,
um eine Nachrüstung der Anlagen zu erleichtern, an der
zentralen Datenübertragungsleitung D2 als zentrale Zusatzeinrichtung angeschaltet werden. Diese zentrale Zusatzeinrichtung ist in der Zeichnung mit ZZ bezeichnet und
ihr sind zugeordnet: Der Rückrufnachrichtenspeicher RSP,
der Nachrichtensendespeicher NSP, Umsetzschaltmittel US
und Zeitschaltmittel Z.

Die vorstehend aufgezählten Einrichtungen arbeiten jetzt
bei einem vergeblichen Anruf der Teilnehmerstelle T1 der
Anlage I zu der Teilnehmerendstelle T2 in der Anlage II
wie nachfolgend beschrieben wird, zusammen. Sowohl bei
Belegtsein der Teilnehmerendstelle T2 als auch bei Nichtmelden innerhalb einer bestimmten Zeit, welche Zeit von
zentralen Zeitschaltmitteln Z in der zentralen Zusatzeinrichtung ZZ bestimmt wird, wird die Umschaltung der
über den Verbindungssatz AVS2 ankommenden Verbindung von
der Teilnehmerstelle T2 auf einen Rückrufverbindungssatz
z.B. RVS1 durch entsprechende Umkopplungen im Sprechwegekoppelnetzwerk verbunden. Die Rückrufverbindungssätze,
z.B. RVS1, RVS2 stehen mit der zentralen Zusatzeinrichtung ZZ in Verbindung. Über diesen Rückrufverbindungssatz erfolgt die Anschaltung des Nachrichtensendespeichers

0036619

an den bestehenden Verbindungsweg, so daß die von diesen Nachrichtensendespeicher übertragene sprachliche Nachricht dem vergeblich Anrufenden der Teilnehmerstelle T1 in der Anlage I übertragen werden kann. Die Nachricht beinhaltet eine Mitteilung und eine Aufforderung, die eigene Kennzahl entweder durch Wahl oder durch Sprache, je nach System, zum Rückrufverbindungssatz zu übertragen. Die empfangenen Informationen werden im Rückrufverbindungssatz nach Sprache bzw. Codierung bewertet und dem Rückrufnachrichtenspeicher RSP der zentralen Zusatzeinrichtung ZZ zur Zwischenspeicherung übertragen. Gleichzeitig wird auch von dem Rückrufverbindungssatz die in Zuordnung zum belegten Verbindungssatz AVS2 in der Teilsteuerung AST2 gespeicherte Adresse der vergeblich angerufenen Teilnehmerstelle abgefragt und ebenfalls in den Rückrufnachrichtenspeicher zwischengespeichert. Mit der Zwischenspeicherung dieser Informationen im Rückrufnachrichtenspeicher wird gleichzeitig in Zuordnung zur Adresse der vergeblich angerufenen Teilnehmerendstelle T2 ein Kennzeichnungsbit unter Zuhilfenahme der zentralen Steuerung ZS zur Teilsteuerung TS2 und dort zum teilnehmerindividuellen (TSP) Speicher der Teilnehmerendstelle T2 übertragen. Gegebenenfalls kann als Quittung des Empfangs der übertragenen Nachricht der Teilnehmerstelle T1 und der Beendigung der Vorgänge im Rückrufnachrichtenspeicher der vergeblich angerufenen Teilnehmerstelle noch eine Nachricht mittels des Nachrichtensendespeichers übertragen werden.

Wenn jetzt der Teilnehmer der Teilnehmerendstelle T2 seine bestehende Verbindung beendet bzw. nach Rückkehr ein abgehendes Gespräch geführt hat und dieses Gespräch wieder zu Ende ist, wird unter Zuhilfenahme der zentralen Steuerung geprüft ob in Zuordnung zu dieser Teilnehmerstelle im teilnehmerindividuellen Speicher ein Bit zur Kennzeichnung,daß eine Rückrufnachricht im Rückrufnachrichtenspeicher hinterlegt ist, vorhanden ist oder nicht. Ist ein solches Bit vorhanden, so wird selbsttätig die Teilnehmerendstelle T2 mit einem freien Rückrufverbindungssatz z.B. RVS1 über das Koppelfeld SK(II) verbunden. Gleichzeitig wird im Rückrufverbindungssatz gekennzeichnet, daß es sich hier nicht um die Umkopplung eines ankommenden Anrufes sondern um die Anschaltung einer vergeblich angerufenen Teilnehmerendstelle handelt.

Die Teilnehmerendstelle erhält aus dem Nachrichtenspeicher NSP eine gesprochene Information, daß eine Rückrufverbindung hergestellt wird. Die Herstellung der Verbindung erfolgt automatisch. Hierzu wird der belegte Rückrufverbindungssatz RVS1 über das Koppelnetzwerk SK(II) auf einen freien Verbindungssatz, z.B. AVS2 nach Übertragung der Nachricht zur Teilnehmerstelle T2 umgekoppelt. Es wird die Verbindung zur ursprünglich vergeblich anrufenden Teilnehmerstelle T1 durch selbsttätige Übertragung der gespeicherten Wahlkennzeichen hergestellt. Nach Aussendung aller Wahlkennzeichen wird die Teilnehmerendstelle T2 ebenfalls mit dem Verbindungssatz AVS2 verbunden. Kommt die Verbindung zwischen der Teilnehmerstelle T1 und der Teilnehmerendstelle T2 zustande, so wird mit dem Meldekennzeichen der Rückrufverbindungssatz RVS1 freigeschaltet und werden die in Zuordnung zur Teilnehmerendstelle T2 gespeicherten Informationen im Speicher RSP gelöscht.

Kommt die Verbindung nicht zustande, so kann entweder der Teilnehmer der Teilnehmerendstelle T2 die gespeicherten Informationen durch Wahl einer Sonderkennziffer löschen bzw. wenn es sich um eine gesprochene Information handelt, abfragen und anschließend löschen.

Wenn es sich um eine gesprochene Nachricht einer vergeblich angerufenen Teilnehmerstelle handelt, so ist diese auszuwerten und sind die gesprochenen Zahleninformationen

0036619

von einer Umsetzeinrichtung umzuwerten um eine selbsttätige Wahl zu ermöglichen. Wird keine selbsttätige Wahl für die Herstellung der Rückrufverbindung vorgesehen, so wird anstelle der selbsttätigen Herstellung der Verbindung die gesprochene Nachricht der Teilnehmerendstelle T2 über den angeschalteten Rückrufverbindungssatz, z.B. RVS1 zugespielt. Der Teilnehmer der Teilnehmerendstelle kann sich diese Information notieren und dann die Verbindung selbst durch Wahl herstellen. Die einfachere Lösung ist, wenn der Teilnehmer einer vergeblich anrufenden Teilnehmerstelle, z.B. T1, mittels Wahl die zu sendenden Informationen überträgt. Eine Löschung des Rückrufnachrichtenspeichers erfolgt in jedem Falle entweder nach selbsttätiger, erfolgreicher Herstellung einer Rückrufverbindung oder nach Übermittlung einer Nachricht an die vergeblich angerufene Teilnehmerendstelle T2. Der Speicherplatz im Rückrufnachrichtenspeicher steht dann wieder für andere Anrufe gegebenenfalls anderer Teilnehmerendstellen zur Verfügung.

Den Teilnehmerendstellen, z.B. der Teilnehmerendstelle T2, ist eine Berechtigungskennzeichnung zugeordnet, welche einer Speicherbereichsadresse des Rückrufnachrichtenspeichers RSP entspricht. Hierdurch ist es möglich, als Rückrufnachrichtenspeicher einen Speicher zu verwenden, der nicht ausschließlich zu diesem Zwecke, sondern auch noch für andere Zwecke dient. Außerdem besteht dadurch die Möglichkeit bevorrechtigte Teilnehmer mehr Speicherplatz im Rückrufnachrichtenspeicher zur Verfügung zu stellen als normale Teilnehmerendstellen. In dem betreffenden Speicherbereich ist Speicherplatz für die Aufnahme der Adresse der vergeblich angerufenen Teilnehmerendstelle und für die Aufnahme weiterer von der vergeblich anrufenden Teilnehmerstelle übermittelten Informationen vorgesehen. Wie bereits vorstehend erwähnt, ist die vorübergehende Zuordnung des Speicherplatzes im
Rückrufnachrichtenspeicher durch eine entsprechende
Kennung, z.B. durch ein abgespeichertes Bit, im entsprechenden
teilnehmerindividuellen Speicher gekennzeichnet. Dieser teilnehmerindividuelle Speicher wird dann bei einer Zustandsänderung, vorzugsweise bei der Beendigung eines Gespräches,
einer Teilnehmerendstelle abgefragt. Dies bedeutet also,
daß bei jedem Freiwerden einer entsprechend berechtigten
Teilnehmerstelle der teilnehmerindividuelle Speicher TSP
der Teilsteuerung TS2 auf Vorhandensein einer Rückrufwunschanschaltungskennung geprüft und unter Verwendung
der Adresse der vergeblich angerufenen Teilnehmerendstelle T2 der Rückrufnachrichtenspeicher über einen zu
belegenden Verbindungssatz zwecks Informationsübertragung
angeschaltet wird.

Nach der selbsttätigen Verbindung des Rückrufnachrichtenspeichers mit der vergeblich angerufenen Teilnehmerendstelle können unter Verwendung der Umsetzschaltmittel und
entsprechender Auswahlmittel die für einen selbsttätigen
Aufbau der Rückrufverbindung notwendigen Informationen
zu der entsprechenden zentralen Steuereinrichtung und zum
belegten Verbindungssatz gegeben werden. Dieser Vorgang
wird zweckmäßigerweise von einer zusätzlichen Schaltmaßnahme der vergeblich angerufenen Teilnehmerendstelle abhängig gemacht. Diese Schaltmaßnahme kann beispielsweise
in der Wahl einer Sonderkennziffer bestehen. Diese Kennziffer wird dann in Abhängigkeit des bestehenden Schaltzustandes bewertet und führt zu dem genannten selbsttätigen
Aufbau der Rückrufverbindung.

Gleichzeitig können für ein und derselben Teilnehmerstelle
mehrere vergeblich Anrufenden Informationen für einen
Rückruf abspeichern, insoferne entsprechender Speicherplatz zur Verfügung steht. Um dies zu ermöglichen, kann

0036619

einem Teilnehmer nach jedem vergeblichen Anruf mit Informationsspeicherung ein weiterer Speicherplatz durch Einspeicherung der Adresse des vergeblich Angerufenen reserviert werden und zwar bis der erste, vergebliche Anruf erledigt ist. Beim Löschen des ersten Speicherplatzes wird der zweite Speicherplatz gelöscht, wenn dort keine Informationen eines weiteren vergeblich Anrufenden gespeichert sind. Sind solche gespeichert, so erfolgt nach Auslösen der ersten Verbindung zum ersten vergeblich Anrufenden selbsttätig die Abwicklung für den zweiten Anruf, wie beschrieben.

In Ergänzung zum vorstehenden ist noch zu erwähnen, daß bei selbsttätiger Übermittlung der Adresseninformationen des Anrufenden nach der Ansage-Aufforderung aus dem Nachrichtensendespeicher durch eine zusätzliche Signalübertragung (Nachwahl von in der Ansage mitgeteilten Kennziffern) seitens des vergeblich Anrufenden diese im Zielamt des vergeblich Angerufenen zwischengespeicherten Adresseninformationen zum Rückrufnachrichtenspeicher übertragen werden. Hier stehen sie zum späteren Verbindungsaufbau nach dem ersten Freiwerden des ursprünglich vergeblich Angerufenen zur Verfügung. Wenn das Amt des vergeblich Anrufenden durch eine zusätzliche Schaltmaßnahme des Anrufenden, selbsttätig die Adresse des Anrufenden sendet, wird diese aufgrund des bestehenden Schaltzustandes sofort in den Rückrufnachrichtenspeicher (RSP) gegeben und steht dort für einen einzuleitenden Rückruf zur Verfügung.

Zur Erläuterung der weiteren Ausbildung der Erfindung wird angenommen, daß von einer zur Abgabe eines Rückrufauftrages berechtigten Teilnehmerstelle aus eine zweite Teilnehmerstelle angerufen wird. Die angerufene Teilnehmerstelle ist zwar frei, es wird jedoch dort der Telefonhörer nicht abgenommen, d.h. der dort anstehende Verbindungswunsch wird nicht entgegengenommen. Der anrufende Teilnehmer kann jetzt ein Sonderkennzeichen nachwählen, wodurch sowohl die Adresse der rufenden Teilnehmerstation als auch die Adresse der gerufenen Teilnehmerstation

0036619

in einer zentralen Speichereinheit abgespeichert wird. Der ursprünglich anrufende Teilnehmer kann anschließend von seiner Teilnehmerstation aus beliebig ankommende und abgehende Gespräche führen. Von der zentralen Steuereinheit wird die ursprünglich angerufene Teilnehmerstation überwacht, und der mit dem Sonderkennzeichen eingegebene Rückrufauftrag bleibt vorgemerkt. Wird nach einer bestimmten Zeit an der ursprünglich angerufenen Station ein ankommendes oder ein abgehendes Gespräch geführt, dann wird durch die zentrale Steuereinrichtung das Auslösen der entsprechenden Verbindung als Anwesenheitszeichen registriert. Die ursprünglich angerufene Teilnehmerstation wird für ankommende und abgehende Verbindungen gesperrt und mit Hilfe der eingespeicherten Adresse der ursprünglich anrufenden Teilnehmerstation erfolgt in bekannter Weise ein entsprechender Belegungsversuch dieser Station. Ist die ursprünglich anrufende Teilnehmerstation frei, dann erfolgt auch ein Ruf zur ursprünglich angerufenen Teilnehmerstation und nach Abheben der Handapparate bei beiden Seiten erfolgt die Verbindungsdurchschaltung.

In der Praxis kann das so aussehen, daß der Teilnehmer einer Teilnehmerstation grundsätzlich bei der Rückkehr zu seiner Station nach einer längeren Abwesenheit den Handapparat abhebt und wieder auflegt. Das kurzzeitige Belegen und wieder freigeben einer Teilnehmerschaltung wird entsprechend dem Vorabgeschilderten von der zentralen Steuereinrichtung genauso als Anwesenheitszeichen erkannt wie das Auslösen einer echten Verbindung und ein evtl. vorliegender Rückrufauftrag wird automatisch ausgeführt. Bei der infrage kommenden Anlage sind dabei keine zusätzlichen Speichereinheiten notwendig, sondern die bereits vorhandenen Daten und Adressenspeicher in Verbindung mit dem zentralen Steuerwerk genügen zur Durchführung des Verfahrens.

Geht man davon aus, daß ein Teilnehmer einer ursprünglich angerufenen Teilnehmerstation nach seiner Abwesenheit und erfolgter Rückkehr selbst bestimmen will, wann
er evtl. vorliegende Rückrufe tätigen will, dann kann
das Anwesenheitszeichen auch in der Abgabe eines weiteren Sonderzeichens an Stelle einer Verbindungsauslösung
bestehen. Der zurückgekehrte Teilnehmer tätigt also zuerst die von ihm für wichtig gehaltenen Telefongespräche
und wählt dann das weitere Sonderzeichen zur Auslösung
eines evtl. gewünschten Rückrufes.

Das erfindungsgemäße Verfahren ist auch dann von besonderem Interesse, wenn die ursprünglich angerufene
Teilnehmerstation ein Vermittlungsplatz ist. Erfolgt
dann ein Anruf über beispielsweise eine Meldeleitung,
während die Vermittlungsperson mit der Übernahme und
Vermittlung anderer Verbindungen beschäftigt ist, den
Fernsprechapparat der Meldeleitung also nicht bedienen
kann, so ist von Seiten des anrufenden Teilnehmers nach Eingabe des Sonderkennzeichens kein weiteres Warten mit dem
Telefonhörer am Ohr notwendig. Der anrufende Teilnehmer
kann weitere Gespräche führen und wird dann automatisch
vom Vermittlungsplatz über die Meldeleitung zurückgerufen. Dabei ist es allerdings zweckmäßig, daß der Rückrufauftrag an der gerufenen Teilnehmerstation (dem Vermittlungsplatz) optisch oder akustisch angezeigt wird.

Weiterhin ist es zweckmäßig, die Zeit, während der ein
Rückrufauftrag ansteht bzw. vorgemerkt ist, zu begrenzen.
Dauert die Wartezeit zulange, dann liegt die Möglichkeit nahe, daß der anrufende Teilnehmer nicht mehr an
seiner Teilnehmerstation ist bzw. daß der gerufene
Teilnehmer nicht mehr zurückkehrt. Das Vormerken eines
Rückrufauftrages sollte daher zumindest die Dauer eines
Arbeitstages nicht überschreiten.

Aus dem Vorstehenden ist zu entnehmen, daß es nach dem erfindungsgemäßen Verfahren in einfacher Weise ohne besonderen Aufwand möglich ist, in einem zentral gesteuerten Fernsprechvermittlungssystem einen Rückrufauftrag auch dann einzugeben, wenn bei dem ursprünglichen Anruf die angerufene Teilnehmerstelle zwar frei war, aber das ankommende Gespräch nicht entgegengenommen wurde.

1 Figur

13 Ansprüche

.0036619

## Patentansprüche

1. Schaltungsanordnung für eine Fernsprechanlage, insbesondere Fernsprechnebenstellenanlage, mit zentralen Einrichtungen für eine Verbindungswegeherstellung und mit bei vergeblichen Anrufen Informationen aufnehmenden Speicherplätzen, welche von einem vergeblich Angerufenen nach Freiwerden selbsttätig bzw. nach Rückkehr an seiner Teilnehmerendstelle abfragbar sind, d a d u r c h   g e k e n n z e i c h n e t  , daß in Abhängigkeit des Schaltzustandes "Teilnehmerendstelle (T2) belegt" bzw. "Nichtmelden der Teilnehmerendstelle (T2) "innerhalb einer von Zeitschaltmitteln (Z) vorgegebenen Zeit ein von der vergeblich anrufenden Teilnehmerstelle (T2) belegter Verbindungssatz (AVF2) mit einem besonderen Rückrufnachrichtenspeicher (RSP) verbunden wird, dem ein Nachrichtensendespeicher (NSP) zugeordnet ist, so daß vom vergeblich Anrufenden auf entsprechender sprachlicher Aufforderung die Übertragung der Informationen, die für den Aufbau einer Rückrufverbindung seitens des vergeblich Angerufenen erforderlich sind, in einfacher Weise zum Rückrufnachrichtenspeicher einleitbar ist und daß dieser Rückrufnachrichtenspeicher (RSP) in Abhängigkeit eines durch eine Schaltzustandsänderung an der betreffenden Teilnehmerendstelle (T2) des vergeblich Angerufenen mit dieser Teilnehmerendstelle zur Übermittlung der in Zugehörigkeit zur Adresse dieser Teilnehmerendstelle (T2) gespeicherten Informationen verbunden wird.

2. Schaltungsanordnung nach Anspruch 1, d a d u r c h   g e k e n n z e i c h n et  , daß den Teilnehmerendstellen (z.B. T2) eine Berechtigungskennzeichnung zugeordnet ist, welche einer Speicherbereichsadresse des Rückrufnachrichtenspeichers entspricht.

3. Schaltungsanordnung nach Anspruch 2, d a d u r c h  g e k e n n z e i c h n e t , daß in den betreffenden Speicherbereich Speicherplatz für die Aufnahme der Adresse der vergeblich angerufenen Teilnehmerendstelle (T2) und für die Aufnahme weiterer von der vergeblich anrufenden Teilnehmerstelle übermittelten Informationen vorgesehen ist.

4. Schaltungsanordnung nach einem der vorangehenden Ansprüche, d a d u r c h  g e k e n n z e i c h - n e t , daß die vorübergehende Zuordnung des Speicherplatzes im Rückrufnachrichenspeicher (RSP) durch eine entsprechende Kennung, z.B. ein Bit, im entsprechenden bei Zustandsänderungen an der Teilnehmerendstelle (T2) abgefragten teilnehmerindividuellen Speicher als Rückrufwunschanschaltung gekennzeichnet wird.

5. Schaltungsanordnung nach Anspruch 4, d a d u r c h  g e k e n n z e i c h n e t , daß bei jedem Freiwerden einer entsprechend berechtigten Teilnehmerendstelle der teilnehmerindividuelle Speicher (TSP) auf Vorhandensein einer Rückrufwunschanschaltungskennung geprüft und gegebenenfalls unter Verwendung der Adresse der vergeblich angerufenen Teilnehmerendstelle (T2) der Rückrufnachrichtenspeicher (RSP) über einen zu belegenden Verbindungssatz (z.B. AVS2) zwecks Informationsübertragung angeschaltet wird.

6. Schaltungsanordnung nach Anspruch 4, d a d u r c h  g e k e n n z e i c h n e t , daß dem Rückrufnachrichtenspeicher (RSP) Umsetzschaltmittel für die Umwandlung von Sprachinformationen in codierten Nachrichteninformationen und umgekehrt zugeordnet sind.

7. Schaltungsanordnung nach Anspruch 6, d a d u r c h  g e k e n n z e i c h n e t , daß nach der Anschaltung des Rückrufnachrichtenspeichers durch eine zusätzliche Schaltmaßnahme der vergeblich angerufenen Teilnehmerendstelle (T2) unter Verwendung der Umsetzschaltmittel und entsprechender Auswahlmittel die für einen selbsttätigen Aufbau der Rückrufverbindung notwendigen Informationen zu der entsprechenden zentralen Steuereinrichtung (ZS) und zum belegten Verbindungssatz (z.B. AVS2) gegeben werden.

8. Schaltungsanordnung nach einem der vorangehenden Ansprüche, d a d u r c h   g e k e n n z e i c h n e t , daß mit der Belegung eines ersten Speicherplatzes für die Aufnahme von Informationen eines ersten vergeblich Anrufenden gleichzeitig ein weiterer Speicherplatz dadurch für einen weiteren Anruf reserviert wird, daß im zweiten Speicherplatz die Adresse des vergeblich Angerufenen eingeschrieben wird.

9. Schaltungsanordnung nach Anspruch 1, d a d u r c h   g e k e n n z e i c h n e t , daß die Aufnahme der Informationen im Rückrufnachrichtenspeicher der vergeblich angerufenen Teilnehmerendstelle (T2) auf ein Anwesenheitszeichen eines Teilnehmers auslöst und wobei nach Feststellen der Anwesenheit einer Bedienungsperson an dieser Teilnehmerendstelle (T2) diese gegen ankommende und abgehende Anrufe bis zur Durchschaltung der Rückrufverbindung zur vergeblich anrufenden Teilnehmerendstelle (T1) nach deren Freiprüfung bzw. bis zur Löschung des Rückrufauftrages gesperrt wird.

10. Verfahren nach Patentanspruch 9, d a d u r c h   g e k e n n z e i c h n e t , daß das Anwesenheitszeichen an der vergeblich angerufenen Teilnehmerendstelle (T2) aus dem Auflegen des Handapparates besteht.

11. Verfahren nach Patentanspruch 9, d a d u r c h   g e k e n n z e i c h n e t , daß das Anwesenheitszeichen an der vergeblich angerufenen Teilnehmerstelle (T2) aus der Wahl einer bestimmten Kennziffer und dem nachfolgenden Auflegen des Handapparates besteht.

12. Verfahren nach Patentanspruch 9, d a d u r c h g e k e n n z e i c h n e t , daß das Vorliegen von Rückrufaufträgen dann optisch oder akustisch angezeigt wird, wenn beispielsweise die vergeblich angerufene Teilnehmerstelle (T2) ein Vermittlungsplatz ist.

13. Verfahren nach Patentanspruch 9, d a d u r c h g e k e n n z e i c h n e t , daß das Vorliegen der Rückrufaufträge zeitlich überwacht und nach einer maximalen Wartezeit automatisch gelöscht werden.

0036619

| **EINSCHLÄGIGE DOKUMENTE** | | | **KLASSIFIKATION DER ANMELDUNG (Int. Cl.³)** |
|---|---|---|---|
| **Kategorie** | **Kennzeichnung des Dokuments mit Angabe, soweit erforderlich, der maßgeblichen Teile** | **betrifft Anspruch** | |
| | <u>DE - A1 - 2 812 953</u> (SIEMENS)<br><br> + Seite 6, Zeile 1 - Seite 7, Zeile 3; Seite 16, Zeile 19 - Seite 20, Zeile 4; Fig. +<br><br>-- | 1-3,8, 9 | H 04 M 3/48<br>H 04 Q 3/42 |
| | <u>DE - A1 - 2 616 062</u> (SOCIETE <u>FRANCAISE D'ETUDES ET DE REALI-SATION D'EQUIPEMENT DE TELE-COMMUNICATIONS</u>)<br><br> + Seite 1, Zeile 1 - Seite 6, Zeile 24; Seite 9, Zeilen 3-5 +<br><br>-- | 1,13 | **RECHERCHIERTE SACHGEBIETE (Int. Cl.³)** |
| | <u>FR - A1 - 2 307 410</u> (CHEMARIN)<br><br> + Seite 1, Zeile 1 - Seite 2, Zeile 34 +<br><br>---- | 1 | H 04 M 3/00<br>H 04 M 1/00<br>H 04 Q 3/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angeführtes Dokument
&: Mitglied der gleichen Patent-familie, ubereinstimmendes Dokument

| X | Der vorliegende Recherchenbericht wurde für alle Patentansprüche erstellt. | | |
|---|---|---|---|
| **Recherchenort**<br>WIEN | **Abschlußdatum der Recherche**<br>07-07-1981 | **Prufer**<br>HAJOS | |